# EUROPEAN PATENT APPLICATION

(11) **EP 4 557 483 A1**
(43) Date of publication of application: **21.05.2025**
(21) Application number: 24176422.4
(22) Date of filing: 16.05.2024
(51) Int. Cl.: H01M 50/30, H01M 50/342, H01M 50/103, H01M 50/15, H01M 50/209

(54) **SECONDARY BATTERY AND BATTERY PACK INCLUDING THE SAME**

(30) Priority: 20.11.2023 KR 20230159969
(71) Applicant: Samsung SDI Co., Ltd., Yongin-si, Gyeonggi-do 17084 (KR)
(72) Inventor: KIM, Kee Yun, 16678 Suwon-si (KR)
(74) Representative: Marks & Clerk LLP

(57) **Abstract**

A secondary battery and a battery pack includes an electrode assembly, a case configured to accommodate the electrode assembly, a cap plate coupled to the case and having a vent hole formed therein, and a vent pressure control device comprising a fracture portion that is fracturable by a gas pressure, is rotatably installed on the cap plate, and is variable in position facing the vent hole by rotation thereof.

## Description

### BACKGROUND

### 1. Technical Field

Aspects of embodiments of the present disclosure relate to a secondary battery and a battery pack including the same.

### 2. Description of the Related Art

Generally, as the demand for portable electronic products, such as notebook computers, video cameras, and mobile phones has rapidly increased and the commercialization of robots, electric vehicles, and the like has been accelerated, a battery pack allowing repeated charging and discharging has been actively researched.

Typically, batteries have a structure including an electrode assembly that charges and discharges current, and a case in which the electrode assembly is accommodated. The electrode assembly is accommodated inside the case via an opening of the case, and the opening is sealed as a cap assembly is coupled thereto.

In order to discharge high-pressure gas inside the case to the outside, a safety device that is fractured by gas pressure has been applied to the cap assembly, but has conventionally been limited to a structure that can be operated only at a certain preset gas pressure. Thus, cap assemblies had to be individually designed and manufactured according to a battery model, a production purpose, and an application environment, with the problem that safety deteriorated when the battery was applied to an object other than the intended purpose or environment, or when the application environment was changed.

The above-described information disclosed in the technology that forms the background of the present disclosure is only intended to improve understanding of the background of the present disclosure, and thus may include information that does not constitute the related art.

### SUMMARY

An aspect of embodiments of the present disclosure is directed to providing a secondary battery and a battery pack capable of improving operational convenience and battery safety.

These and other aspects and features of the present disclosure will be described in or will be apparent from the following description of some embodiments of the present disclosure.

According to one or more embodiments, a secondary battery includes an electrode assembly, a case configured to accommodate the electrode assembly, a cap plate coupled to the case and having a vent hole therein (e.g. formed therein), and a vent pressure control device comprising a fracture portion that is fracturable by a gas pressure, is rotatably installed on the cap plate, and is variable in position facing the vent hole by rotation thereof.

The vent pressure control device may include a fracture member on which the fracture portion is arranged (e.g. formed) as a plurality of fracture portions, and which is arranged (e.g. disposed) to face the vent hole, and a rotation control member on (e.g. installed on) the cap plate and configured to rotatably support the fracture member so that one of the plurality of fracture portions selectively faces the vent hole.

The fracture portions may be formed by pressing a part of the fracture member such that a thickness or shape thereof is varied.

The fracture portions may include a first fracture portion that fractures (e.g. is configured to fracture) at a first gas pressure, and a second fracture portion spaced apart (e.g. that is disposed to be spaced apart) from the first fracture portion and which fractures (e.g. is configured to fracture) at a second gas pressure different from the first gas pressure.

The first fracture portion may be formed by processing a part of the fracture member with a first thickness less than a thickness of the fracture member, and the second fracture portion may be formed by processing a part of the fracture member with a second thickness less than the first thickness.

The rotation control member may include an input member on (e.g. installed on) the cap plate and configured to receive a rotational force at a position spaced apart from the vent hole, a rotating body rotatable by receiving the rotational force from the input member, and a belt of which a part is in contact with a circumference of the rotating body and another part is in contact with a circumference of the fracture member, and configured to connect the fracture member to the rotating body so that the fracture member is rotated in conjunction with the rotating body.

The fracture member may include a circular body on which the plurality of fracture portions are arranged in a circumferential direction, and a plurality of protrusions on (e.g. formed on) a circumferential portion of the circular body and in contact with the belt.

The input member may include a first operating member arranged (e.g. installed) to pass through the cap plate and the rotating body, arranged (e.g. installed) to be rotatable at a position spaced apart from the vent hole, and including a part exposed to the outside of the cap plate in a graspable form, and a second operating member coupled to the first operating member by being coupled to an end portion of the first operating member, which passes through the cap plate and the rotating body.

The first operating member may include a grip portion on (e.g. disposed on) an outer side surface of the cap plate, a passing-through portion extending from the grip portion toward an inner side surface of the cap plate through the cap plate, a rotating body connection portion formed continuously with the passing-through portion and connected to the rotating body so that the rotating body rotates together when the grip portion, and a separation prevention portion formed continuously with the rotating body connection portion and coupled to the second operating member.

The secondary battery may further include a gasket between (e.g. disposed between) the cap plate and the fracture member and configured to seal between an edge portion of the vent hole and an edge portion of the fracture portion.

The vent pressure control device may further include a pressing member on (e.g. installed on) the cap plate and configured to press the fracture member toward the cap plate.

The pressing member may include a pressing body comprising an elastic material, a fixing portion on (e.g. formed on) a first part of the pressing body and fixed to the cap plate, a pressing portion on (e.g. formed on) a second part of the pressing body, in contact with the fracture member, and configured to press the fracture member toward the cap plate, a gas through hole passing through (e.g. formed to pass through) the pressing portion at a position corresponding to the fracture portion, and configured to communicate with the vent hole when the fracture portion fractures, and an elastic bending portion formed by bending a third part of the pressing body so that the pressing portion elastically presses the fracture member.

The secondary battery according to one embodiment of the present disclosure may further include a pressing gasket between (e.g. disposed between) the fracture member and the pressing member and configured to seal between an edge portion of the vent hole and an edge portion of the gas through hole.

The rotation control member may include a rotation support device coupled to the cap plate and configured to rotatably support the fracture member.

The secondary battery according to one embodiment of the present disclosure may further include an inner side cover configured to cover the vent pressure control device and arranged (e.g. installed) on the cap plate.

The inner side cover may include an inner side cover body including an insulating material and coupled to an inner side surface of the cap plate, and an open hole passing through (e.g. formed to pass through) the inner side cover body and configured to open another part of the vent pressure control device.

The vent pressure control device may include a fracture member on which the fracture portion that is fractured by gas pressure is formed as a plurality of fracture portions, and which is arranged (e.g. disposed) to face the vent hole, an input member on (e.g. installed on) the cap plate and configured to receive a rotational force at a position spaced apart from the vent hole, a rotating body rotatable by receiving the rotational force from the input member, and a belt of which a part is in contact with a circumference of the rotating body and another part is in contact with a circumference of the fracture member, and configured to connect the fracture member to the rotating body so that the fracture member is rotated in conjunction with the rotating body.

The inner side cover body may include a first cover portion configured to cover a circumferential portion of the fracture member and a part of the belt in contact with the circumferential portion of the fracture member, a second cover portion configured to cover a circumferential portion of the rotating body and another part of the belt in contact with the circumferential portion of the rotating body, and a third cover portion between (e.g. formed between) the first cover portion and the second cover portion and configured to cover another part of the belt arranged (e.g. disposed) between the fracture member and the rotating body.

The vent pressure control device may further include a pressing member on (e.g. installed on) the cap plate and configured to press the fracture member toward the cap plate, and the open hole may include a first open hole at (e.g. formed at) a position corresponding to the fracture member and the pressing member, and a second open hole at (e.g. formed at) a position corresponding to the input member and the rotating body.

According to one or more embodiments, a battery pack includes a housing, and a plurality of secondary batteries arranged (e.g. disposed) in the housing, wherein each of the plurality of secondary batteries includes an electrode assembly, a case configured to accommodate the electrode assembly, a cap plate coupled to the case and having a vent hole therein (e.g. formed therein), and a vent pressure control device including a fracture portion that is fracturable by a gas pressure, rotatably installed on the cap plate, and whose position facing the vent hole is variable by rotation thereof.

In accordance with one or more embodiments of the present disclosure, positions of fracture portions, which are fractured by gas pressure, can be changed by rotating a vent pressure control device that faces a vent hole, so that a reference fracture pressure can be differently selected and changed according to a battery model, a production purpose, an application environment, and the like. Accordingly, operation convenience and safety of a battery can be improved.

In accordance with one or more embodiments of the present disclosure, when forming a plurality of fracture portions in a vent pressure control device, fracture toughness can be differentiated by location by applying different forging ratios to ensure that the fracture portions have different thicknesses and shapes, and one of the plurality of fracture portions having different fracture toughness can be located to correspond to a vent hole by rotating the vent pressure control device. With such adjustment, a reference fracture pressure of a battery can be controlled.

However, the effects obtainable through the present disclosure are not limited to the above effects, and other technical effects that are not mentioned will be clearly understood by those skilled in the art from the following description of the present disclosure.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a perspective view schematically illustrating a secondary battery according to one embodiment of the present disclosure;
FIG. 2 is a cross-sectional view schematically illustrating the secondary battery according to one embodiment of the present disclosure;
FIG. 3 is a perspective view schematically illustrating a cap assembly according to one embodiment of the present disclosure;
FIG. 4 is a perspective view schematically illustrating the cap assembly according to one embodiment of the present disclosure from a direction different from that of FIG. 3;
FIG. 5 is a bottom view schematically illustrating the cap assembly according to one embodiment of the present disclosure;
FIG. 6 is an enlarged perspective view of a part of FIG. 5;
FIG. 7 is a cross-sectional view taken along line A-A' of FIG. 5;
FIG. 8 is an enlarged view of a portion B of FIG. 7;
FIG. 9 is an exploded perspective view schematically illustrating the cap assembly according to one embodiment of the present disclosure;
FIG. 10 is an exploded perspective view schematically illustrating the cap assembly according to one embodiment of the present disclosure from a direction different from that of FIG. 9;
FIG. 11 is a perspective view schematically illustrating a vent pressure control device according to one embodiment of the present disclosure;
FIG. 12 is a perspective view schematically illustrating the vent pressure control device according to one embodiment of the present disclosure from a direction different from that of FIG. 11;
FIG. 13 is a bottom view schematically illustrating the vent pressure control device according to one embodiment of the present disclosure;
FIG. 14 is an exploded perspective view schematically illustrating the vent pressure control device according to one embodiment of the present disclosure;
FIG. 15 is a perspective view schematically illustrating a fracture member according to one embodiment of the present disclosure;
FIG. 16 is a plan view schematically illustrating the fracture member according to one embodiment of the present disclosure;
FIG. 17 is a cross-sectional view taken along line C-C' of FIG. 16;
FIG. 18 is an enlarged view of portion D of FIG. 17;
FIG. 19 is an enlarged view of a portion E of FIG. 17;
FIG. 20 is a cross-sectional view taken along line F-F' of FIG. 16;
FIG. 21 is an enlarged view of a portion G of FIG. 20;
FIG. 22 is an enlarged view of a portion H of FIG. 20;
FIG. 23 is a bottom view schematically illustrating a vent pressure control device according to another embodiment of the present disclosure;
FIG. 24 is a cross-sectional view schematically illustrating the vent pressure control device according to another embodiment of the present disclosure;
FIG. 25 is an enlarged view of a portion I of FIG. 24;
FIG. 26 is a perspective view schematically illustrating a fracture member according to another embodiment of the present disclosure; and
FIG. 27 is a perspective view schematically illustrating a configuration of a battery pack according to one embodiment of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

In describing the present disclosure below with reference to a plurality of embodiments, duplicate descriptions of components identical or corresponding to each other throughout the plurality of embodiments may be omitted. For example, when one component identical or corresponding to another component disclosed in one embodiment is also disclosed in another embodiment, the corresponding one component may be omitted from the description of another embodiment, and still another component that is different from another component of one embodiment may be mainly described.

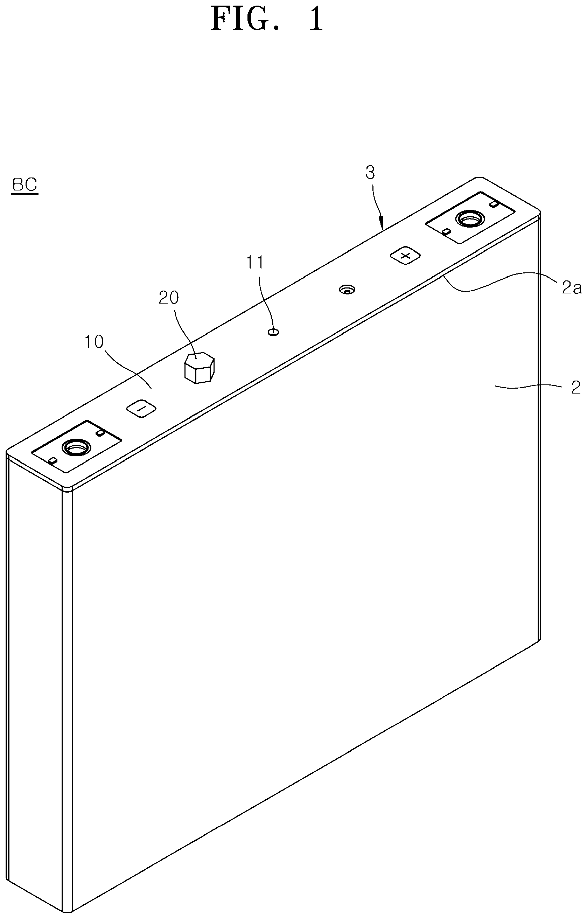

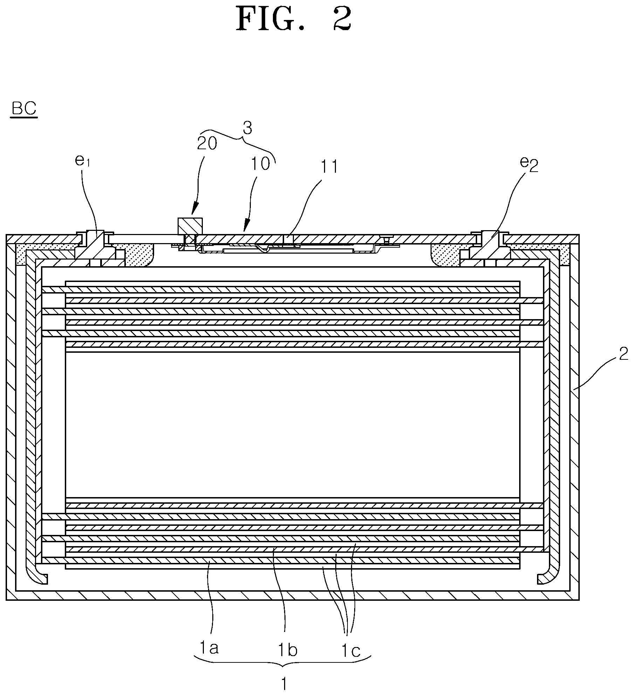

Referring to FIGS. 1 and 2, a secondary battery BC includes an electrode assembly 1, a case 2, and a cap assembly 3.

Herein, a case in which the secondary battery BC is a lithium ion secondary battery and has a prismatic shape will be described as an example. However, the present disclosure is not limited thereto, and the secondary battery BC may be a lithium polymer battery or a cylindrical battery, for example.

The electrode assembly 1 may include a positive electrode 1a, a negative electrode 1b, and a separator 1c. At least one electrode assembly 1 may be provided (e.g. formed).

The positive electrode 1a and the negative electrode 1b may each include a coated portion, which is a region in which an active material is applied to a current collector formed of a thin metal foil, and uncoated portions, which are regions to which the active material is not applied to the current collector formed of the thin metal foil.

The positive electrode 1a and the negative electrode 1b may be wound after interposing the separator 1c, which is an insulator, therebetween. However, the present disclosure is not limited thereto, and the electrode assembly 1 may have a structure in which a positive electrode and a negative electrode, each formed of a plurality of sheets, are alternatively stacked, while interposing a separator therebetween.

The case 2 forms an overall external shape of the secondary battery BC, and may be formed of a conductive metal, such as aluminum, an aluminum alloy, or nickel-plated steel. In addition, the case 2 may provide a space in which the electrode assembly 1 is accommodated. In an example, the case 2 may be formed to have the form of a box having an internal empty space and an opening 2a formed in an upper side.

The cap assembly 3 may be coupled to the case 2, and may seal the case 2. In an example, the cap assembly 3 may be coupled to the opening 2a of the case 2, and may form a sealed inner space together with the case 2.

Electrode terminals e₁ and e₂ connected to the electrode assembly 1 accommodated in the case 2 may be withdrawn to the outside through the cap assembly 3 and electrically connected to terminals outside the case 2.

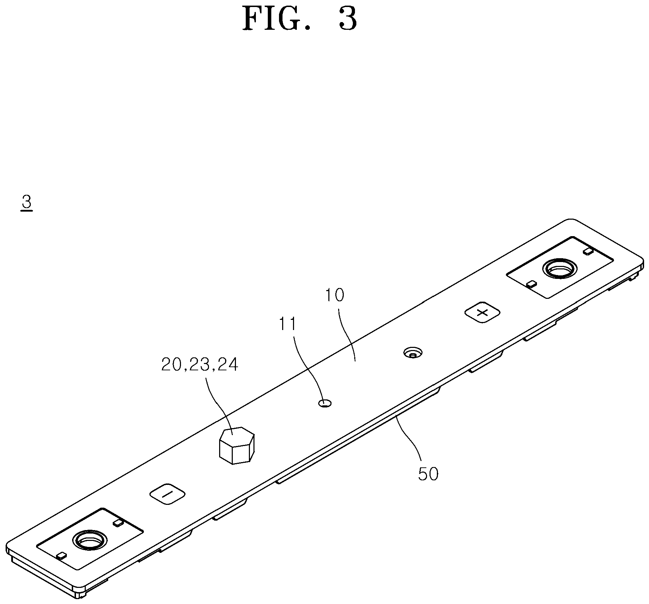

Referring to FIGS. 1 to 4, the cap assembly 3 according to one embodiment of the present disclosure includes a cap plate 10 and a vent pressure control device 20.

The cap plate 10 has a shape corresponding to the opening 2a of the case 2, and may be coupled to the opening 2a. A vent hole 11, which forms a path through which air or gas inside the case 2 may be discharged, is formed in the cap plate 10. The case 2 may have a shape whose upper portion is open, and the opening 2a may have a rectangular shape. The cap plate 10 has a rectangular plate shape corresponding to the opening 2a, and may be tightly coupled to the opening 2a.

The vent pressure control device 20 includes fracture portions 22 fractured by gas pressure, is installed on the cap plate 10 to face the vent hole 11, and may be changed to a position facing the vent hole 11 by rotation. The vent pressure control device 20 may be installed on an inner side surface of the cap plate 10, and the fracture portion 22 may be installed to cover the vent hole 11. When an internal pressure of the case 2 reaches a certain pressure (e.g. a set pressure), the fracture portion 22 may fracture and the vent hole 11 may be opened. In the description of the present disclosure, the term "rotation" refers to a change in orientation while maintaining an installed position unchanged.

The vent pressure control device 20 is rotated by an operating force that may be applied by hand, a tool, electric power, or the like in a state in which the vent pressure control device 20 is rotatably installed on the cap plate 10, and thus a position thereof facing the vent hole 11 is changed. A plurality of fracture portions 22 having different fracture strengths may be formed in the vent pressure control device 20. When the vent pressure control device 20 is rotated, one of the plurality of fracture portions 22 may be selectively disposed to face the vent hole 11.

In describing the technology of the present disclosure, for convenience of description, orientation and position relationships of the components will be described based on FIG. 1, that is, based on a state in which the opening 2a of the case 2 is formed in an upper side and the cap assembly 3 is disposed on an upper portion of the case 2.

In a state in which the cap plate 10 is horizontally disposed, the vent hole 11 may be formed to pass through the cap plate 10 in a vertical direction. In a state in which the cap plate 10 is coupled to the open upper portion of the case 2, a bottom surface of the cap plate 10 may be an inner side surface of the cap plate 10 facing the inside of the case 2, and an upper surface of the cap plate 10 may be an outer side surface of the cap plate 10 exposed to the outside. The vent pressure control device 20 may be installed on the inner side surface of the cap plate 10.

According to one or more embodiments of the present disclosure, by changing the position of the vent pressure control device 20 facing the vent hole 11 by rotating the vent pressure control device 20 having the fracture portions 22 fractured by gas pressure, a reference fracture pressure can be differently selected and changed according to the model, production purpose, and/or application environment of the secondary battery BC. Accordingly, safety and operational convenience of the secondary battery BC can be improved.

More specifically, in one or more embodiments, when forming the plurality of fracture portions 22 in the vent pressure control device 20, fracture toughness may be differentiated by location by applying different forging ratios to ensure that the fracture portions 22 have different thicknesses and shapes, and one of the plurality of fracture portions 22 having different fracture toughness can be located to correspond to the vent hole 11 by rotating the vent pressure control device 20. With such adjustment, the reference fracture pressure of the secondary battery BC may be controlled.

The cap assembly 3 according to one embodiment of the present disclosure may further include an inner side cover 50.

The inner side cover 50 may cover the vent pressure control device 20 and may be installed on an inner surface (bottom surface) side of the cap plate 10. The inner side cover 50 may be disposed to cover a part or all of the vent pressure control device 20. In a state in which the inner side cover 50 is installed on the bottom surface side of the cap plate 10, the inner side cover 50 may protect a lower portion of the vent pressure control device 20 and prevent or substantially prevent the vent pressure control device 20 from being separated downward.

The inner side cover 50 may be disposed to be in contact with the vent pressure control device 20. Accordingly, the inner side cover 50 may support a lower end of the vent pressure control device 20, and may prevent or substantially prevent the vent pressure control device 20 from moving (e.g. arbitrarily moving) when the secondary battery BC moves or vibrates. When the vent pressure control device 20 includes a conductive material, such as a metal, the inner side cover 50 may include an insulating material. Accordingly, it is possible to prevent or substantially prevent the vent pressure control device 20 from being electrically interfered with components inside the case 2.

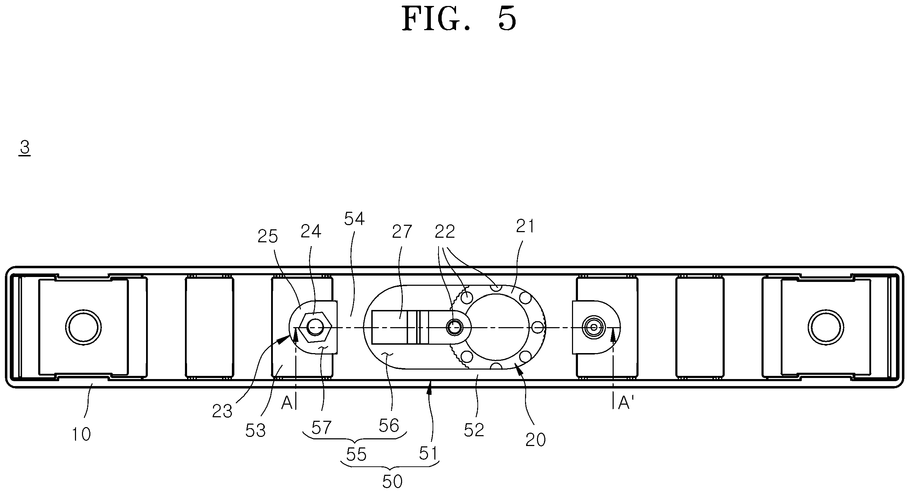

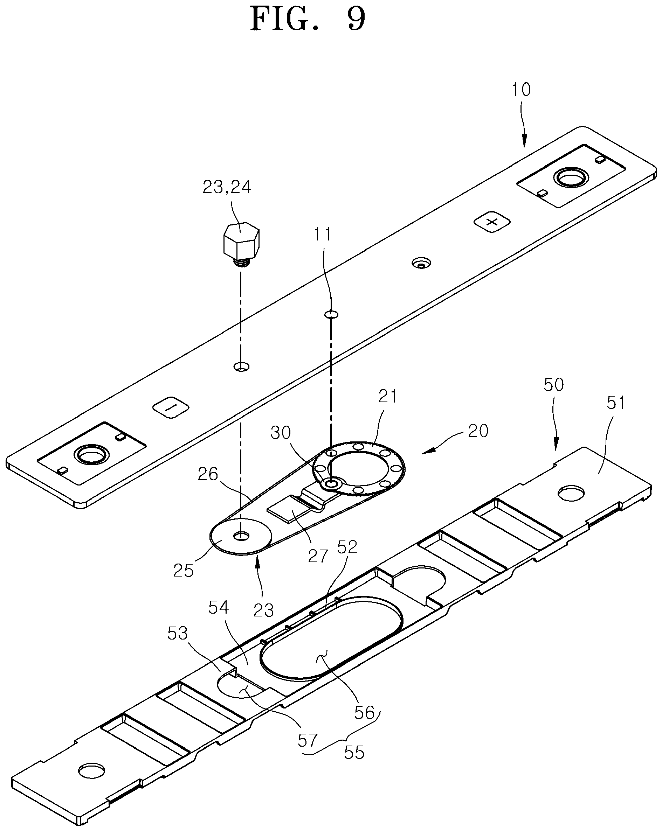

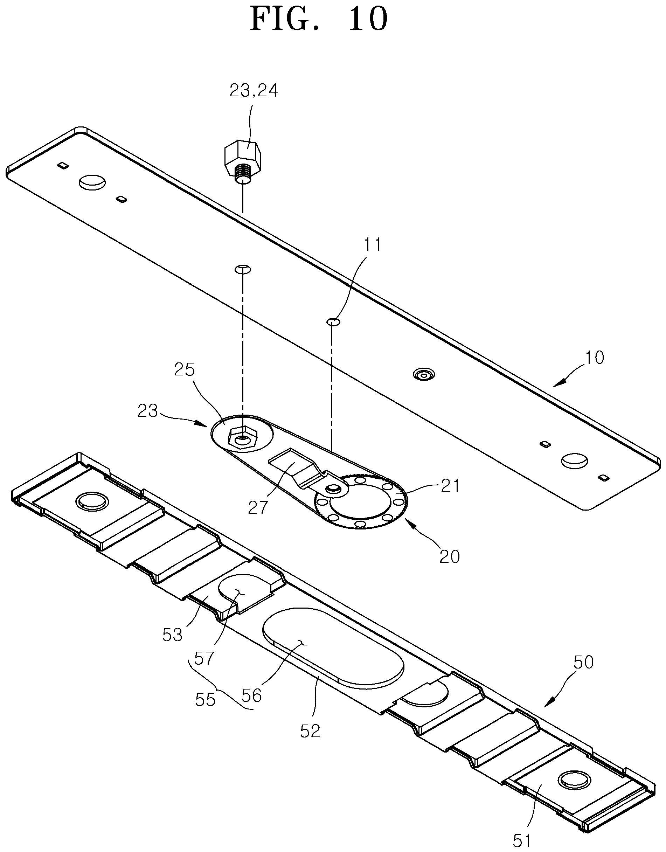

Referring to FIGS. 5 to 10, the vent pressure control device 20 according to one embodiment of the present disclosure may include a fracture member 21, a rotation control member 23, and a pressing member 27.

The fracture member 21 may have a flat plate shape as a whole and may be disposed on a lower side of the vent hole 11. At least a part of the fracture member 21 may be disposed to cover the vent hole 11. The plurality of fracture portions 22 may be formed in the fracture member 21, and one of the plurality of fracture portions 22 may be disposed to face the vent hole 11.

In FIGS. 5 to 10, the fracture member 21 is illustrated as having a circular ring or disk shape, but this is illustrative of example embodiments, and the present disclosure is not particularly limited to the shape or structure of the fracture member 21. For example, the fracture member 21 may have other polygonal or other various shapes, and is not limited to a particular structure and shape as long as the fracture member 21 is rotatable. The fracture portions 22 may be formed by pressing a part of the fracture member 21 such that a thickness or shape thereof may be varied by a processing method such as forging, pressing, or the like.

The rotation control member 23 is installed on the cap plate 10, and may rotatably support the fracture member 21. The fracture member 21 may be rotated by receiving a rotational force through the rotation control member 23. A position and orientation of the fracture member 21 may be controlled by the rotation control member 23 so that one of the plurality of fracture portions 22 selectively faces the vent hole 11.

The pressing member 27 may be installed on the cap plate 10 to press the fracture member 21 toward the cap plate 10. The fracture member 21 may be pressed and brought into close contact with the cap plate 10 by the pressing member 27. Accordingly, gas inside the case 2 may be prevented or substantially prevented from leaking toward the vent hole 11 through a gap between the fracture member 21 and the cap plate 10, and an operation in which the fracture portion 22 fractures when the set pressure is applied may be reliably implemented.

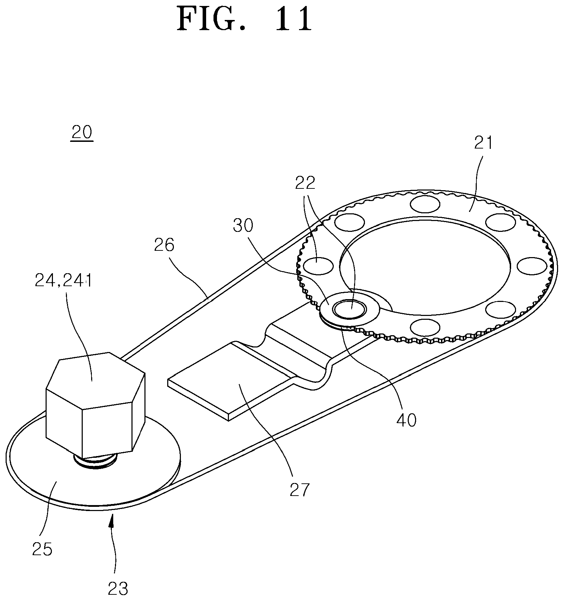

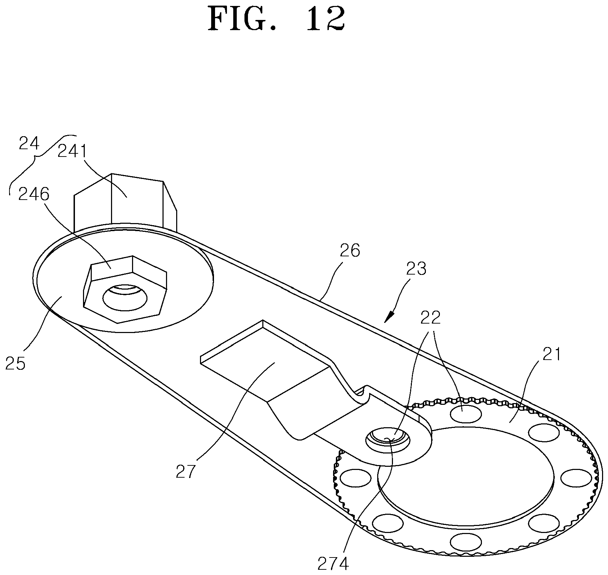

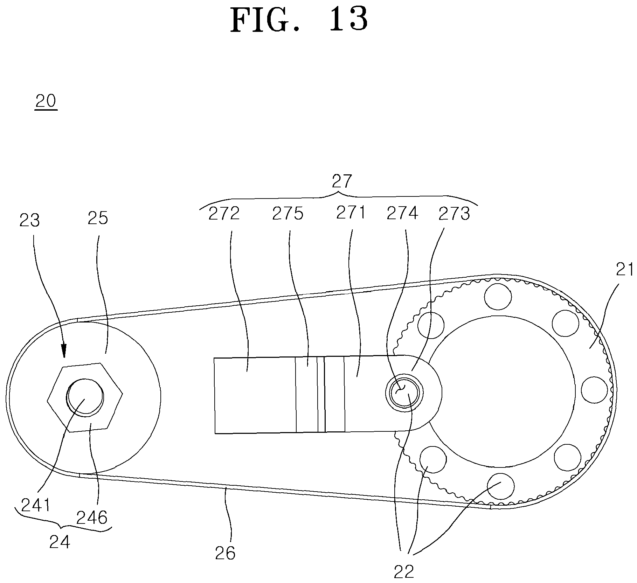

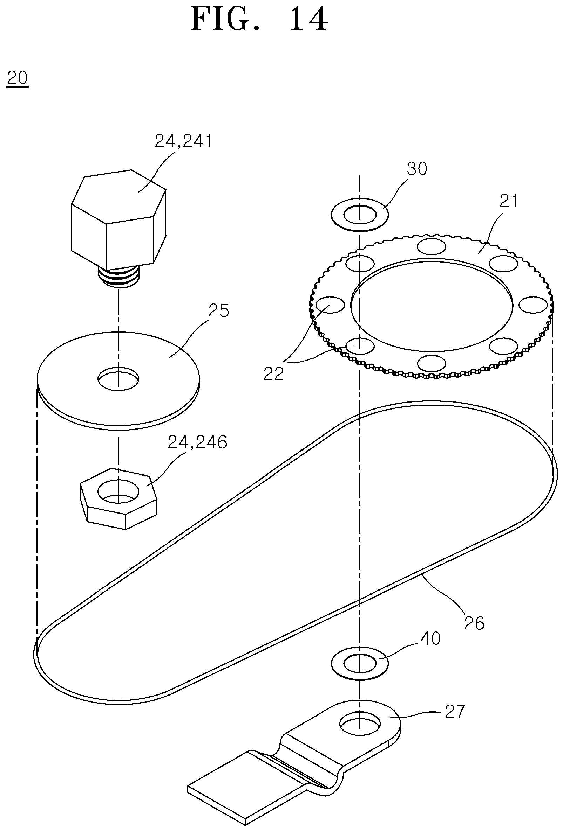

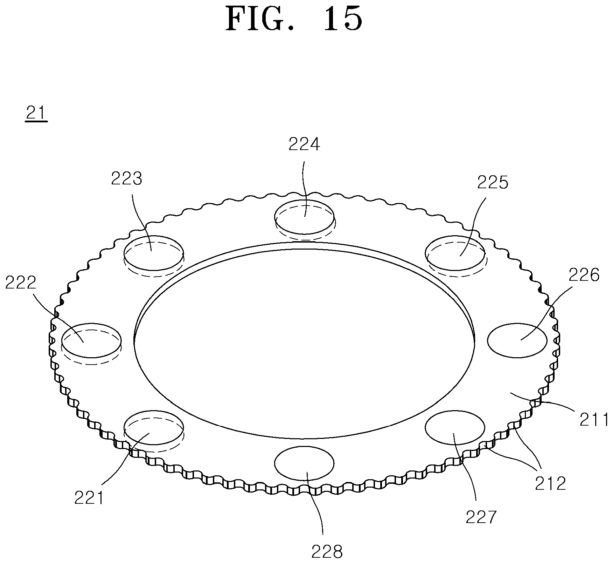

Referring to FIGS. 11 to 15, the fracture member 21 according to one embodiment of the present disclosure may include a circular body 211 and a plurality of protrusions 212.

The circular body 211 may have a plate-shaped circular ring or disk shape. The plurality of fracture portions 22 may be arranged in a circumferential direction on the circular body 211. The protrusion 212 may be formed to protrude in a radial direction on a circumferential portion of the circular body 211. The plurality of protrusions 212 may be irregularly formed along the entire circumferential portion of the circular body 211.

By the plurality of protrusions 212, the fracture member 21 may be securely in contact with a belt 26, which is provided in the rotation control member 23 and will be described below, and may receive the rotational force more stably through the belt 26. When the rotation control member 23 transmits a rotational force to the fracture member 21 by using a gear member or the like instead of the belt 26, and the protrusions 212 may be formed to protrude in the shape of gear teeth. When it is desired to apply a rotational force more directly to the fracture member 21, the rotational force may be applied by bringing a finger or tool into frictional contact with the protrusions 212, or by inserting a nail or tool tip into a groove between the protrusions 212.

Referring to FIGS. 11 to 14, the rotation control member 23 according to one embodiment of the present disclosure may include an input member 24, a rotating body 25, and the belt 26.

The input member 24 may be installed to pass through the cap plate 10 at a position spaced apart from the vent hole 11. A part of the input member 24 is located to protrude from the outer side surface (e.g. upper surface) of the cap plate 10, and another part thereof is located to protrude from the inner side surface (e.g. bottom surface) of the cap plate 10. A rotational force may be received from the outside of the case 2 through the part of the input member 24 protruding from the outer side surface of the cap plate 10, and the rotational force may be transmitted to the inside of the case 2 through the part of the input member 24 protruding from the inner side surface of the cap plate 10.

The rotating body 25 may be rotated by receiving the rotational force from the input member 24. The rotating body 25 may have a disk or pulley shape. The rotating body 25 may be integrally connected to the input member 24 and rotated with the same angular displacement as the input member 24. Like the fracture member 21, a plurality of protrusions (not shown) may be formed on a circumferential portion of the rotating body 25, which is in contact with the belt 26.

The belt 26 may be installed such that a part thereof is in contact with a circumference of the rotating body 25, and another part thereof is in contact with a circumference of the fracture member 21. The belt 26 is not limited to a particular structure and shape, and may have various shapes including a chain belt capable of being caught by the plurality of protrusions 212, as long as it can transmit the rotational force of the rotating body 25 to the fracture member 21.

The fracture member 21 may be connected to the rotating body 25 through the belt 26 and may be rotated in conjunction with the rotating body 25. The fracture member 21 may have a diameter greater than that of the rotating body 25. Accordingly, rotational displacement of the fracture member 21 may be further finely adjusted by an amount corresponding to a ratio of the diameters of the rotating body 25 and the fracture member 21, and the selected fracture portion 22 may be precisely located at a desired position.

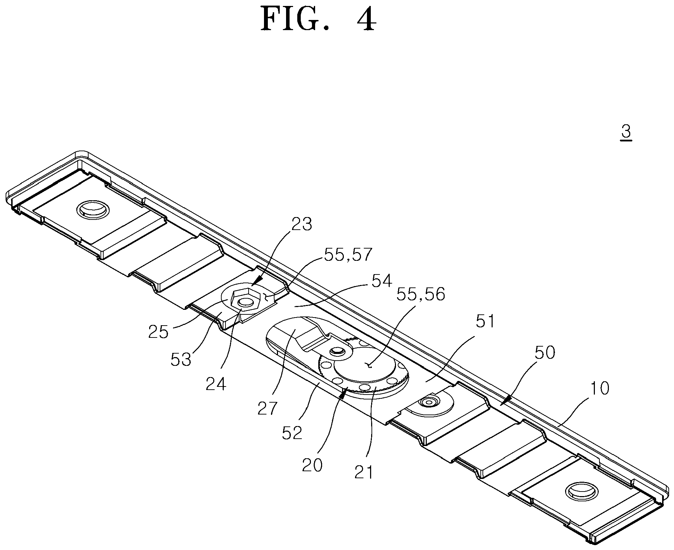

Referring to FIGS. 4 to 7 and 12 to 14, the input member 24 according to one embodiment of the present disclosure may include a first operating member 241 and a second operating member 246.

The first operating member 241 may be installed to pass through the cap plate 10 and the rotating body 25 at a position spaced apart from the vent hole 11. The first operating member 241 may be rotatably installed at a fixed position. An upper portion of the first operating member 241 may be provided in a graspable form and exposed to an outside of the cap plate 10.

The first operating member 241 may be installed to pass through the cap plate 10 and the rotating body 25 from the upper side to the lower side. The second operating member 246 may be coupled to the first operating member 241 by being coupled to a lower portion of the first operating member 241, which passes through the cap plate 10 and the rotating body 25. The first operating member 241 may have a bolt shape, and the second operating member 246 may have a nut shape that can be screw-coupled to the first operating member 241.

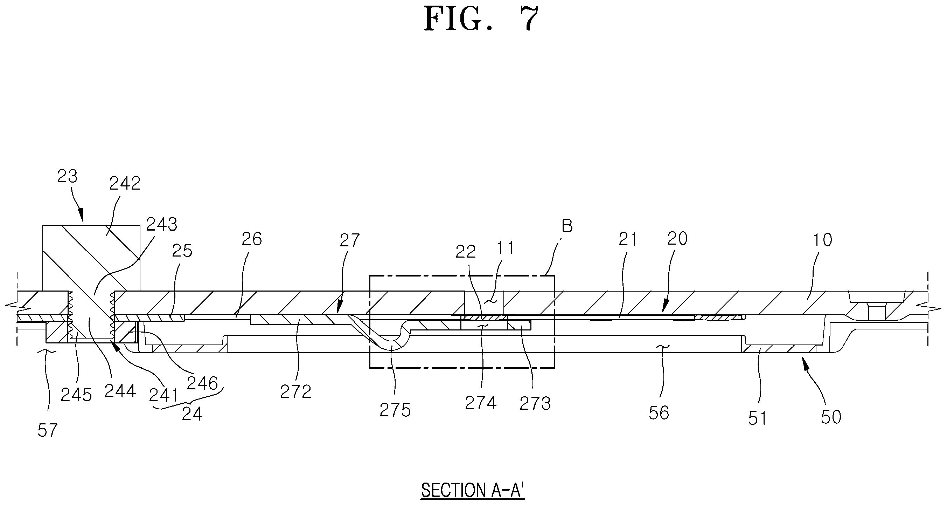

Referring to FIG. 7, the first operating member 241 according to one embodiment of the present disclosure may include a grip portion 242, a passing-through portion 243, a rotating body connection portion 244, and a separation prevention portion 245.

The grip portion 242 is disposed on the outer side surface of the cap plate 10, and may have a form that is graspable by a tool or hand. A cross-section of the grip portion 242 may have a polygonal shape such as a hexagonal shape. The passing-through portion 243 may pass through the cap plate 10 from the grip portion 242 and extend toward the inner side surface of the cap plate 10. The passing-through portion 243 may have a diameter less than that of the grip portion 242.

The rotating body connection portion 244 is formed continuously with a lower portion of the passing-through portion 243, and may be connected to the rotating body 25. The rotating body 25 may be coupled to a circumference of the rotating body connection portion 244 by a bonding method such as bonding, welding, or the like. The rotating body 25 may be coupled to the rotating body connection portion 244 by radially pressure-welding a hole portion (not shown), which is provided (e.g. formed) in the center of rotation of the rotating body 25, to the circumference of the rotating body connection portion 244. The rotating body connection portion 244 may have a cross-sectional shape other than a circular shape, and the rotating body 25 may be provided with the hole portion of a corresponding shape so that the rotating body connection portion 244 may be inserted and assembled thereto. When the grip portion 242 is rotated while the rotating body 25 is connected to the rotating body connection portion 244 as described above, the rotating body 25 may be rotated together with the input member 24 with the same angular displacement.

The separation prevention portion 245 is provided (e.g. formed) continuously with a lower portion of the rotating body connection portion 244, and may be coupled to the second operating member 246. Male screw threads may be formed on the circumference of the separation prevention portion 245, and the second operating member 246 may have female screw threads and may be screw-coupled to the separation prevention portion 245.

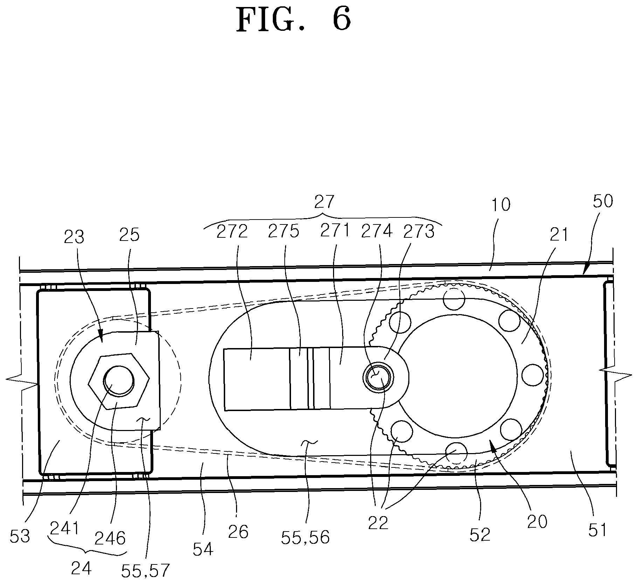

Referring to FIGS. 6 to 8, the pressing member 27 according to one embodiment of the present disclosure may include a pressing body 271, a fixing portion 272, a pressing portion 273, a gas through hole 274, and an elastic bending portion 275.

The pressing body 271 may have a shape and length such that a part is fixable to the cap plate 10 and another part is disposed to overlap the fracture member 21 in the vertical direction. The pressing body 271 may be made of a material having elasticity and capable of bending processing, such as a metal. The pressing body 271 may be formed by cutting a flat metal plate into a desired shape and length. The pressing body 271 may have a rectangular or band shape extending entirely in the radial direction of the fracture member 21. The pressing body 271 may have a length that allows the elastic bending portion 275 (to be described below) to be flexibly formed at an intermediate portion thereof in an extending direction.

The fixing portion 272 is formed at an end portion of the pressing body 271, and may be fixed to a bottom surface portion of the cap plate 10 while being in surface contact therewith. The fixing portion 272 may be coupled to the cap plate 10 by a bonding method, such as laser welding. The fixing portion 272 may have a rectangular shape, and the welded portion may be formed in a "C" shape along an edge thereof.

The pressing portion 273 is formed at the other end portion of the pressing body 271, and may be disposed on a lower side of the fracture member 21 so as to overlap the fracture member 21. The pressing portion 273 is in contact with a bottom surface portion of the fracture member 21 and may press the fracture member 21 upwardly toward the cap plate 10. The gas through hole 274 through which gas may pass may be formed in the pressing portion 273. The pressing portion 273 may be disposed to be parallel to a bottom surface of the fracture member 21 so that an edge portion of the gas through hole 274 can be tightly in surface contact with the fracture member 21.

The gas through hole 274 may be formed to pass through the pressing portion 273 at a position corresponding to the fracture portion 22. The gas through hole 274 may be disposed directly below the vent hole 11 with the fracture member 21 interposed therebetween. The fracture portion 22 is located between the vent hole 11 and the gas through hole 274. When a gas pressure inside the case 2 reaches a certain pressure (e.g. the set pressure), the fracture portion 22 fractures, and the gas through hole 274 may communicate with the vent hole 11. Overpressure air or gas inside the case 2 may be discharged to the outside by continuously passing through the gas through hole 274, the fracture portion 22, and the vent hole 11.

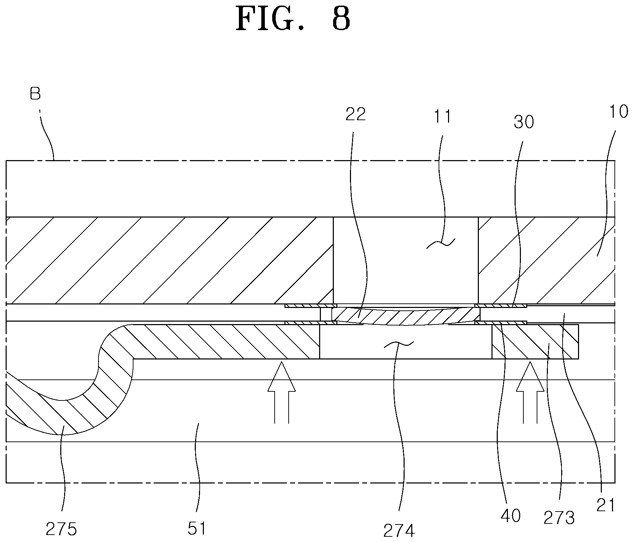

The elastic bending portion 275 may be formed by bending a part of the pressing body 271 having a plate shape in a direction (e.g. downward) spaced apart from the cap plate 10. By forming the elastic bending portion 275 in a state in which the pressing body 271 has a shape bent convexly downward as a whole, when the fixing portion 272 is fixed to the cap plate 10 the pressing portion 273 can be elastically in contact with the fracture member 21. The pressing portion 273 may thus press the fracture member 21 upwardly toward the cap plate 10 with a strength corresponding to an elastic force (see hollow arrow in FIG. 8).

In a state in which the fixing portion 272 is fixed, even when the pressing portion 273 is moved downward a distance (e.g. a predetermined distance), the pressing portion 273 is elastically deformed downward only up to the elastic bending portion 275, and a downward force is not transmitted to the fixing portion 272, so that the fixing state of the fixing portion 272 may be stably maintained. In addition, in a state in which the fixing portion 272 is fixed, even when the pressing portion 273 is moved downward by a distance (e.g. predetermined distance), the pressing portion 273 may come into close contact with the fracture member 21 while naturally moving upward by an elastic restoring force.

By forming the elastic bending portion 275, even when the pressing portion 273 is moved by a distance (e.g. a predetermined distance), the pressing portion 273 may be returned to its initial state. Accordingly, in performing assembly, positioning, and the like of components embedded in the secondary battery BC, an assembly sequence of the components or the like may be more freely changed and applied according to convenience, and the assembly may be more easily performed. Thus, the degree of freedom of assembly and productivity can be improved.

For example, in a state in which the pressing portion 273 is moved downward to be spaced apart from the cap plate 10, an assembly process of inserting the fracture member 21, a gasket 30 (to be described below), a pressing gasket 40 (to be described below), and the like between the pressing portion 273 and the cap plate 10 may be applied. In a state in which the fracture member 21 and the pressing member 27 are sequentially stacked on a lower side of the cap plate 10, an assembly process of fixing the pressing member 27 to the cap plate 10 may be applied.

Referring to FIG. 8, the cap assembly 3 according to one embodiment of the present disclosure may further include the gasket 30 configured to seal a gap between an edge portion of the vent hole 11 and an edge portion of the fracture portion 22. The gasket 30 may have a flat circular ring shape and may be disposed between the cap plate 10 and the fracture member 21. A material, thickness, or shape of the gasket 30 is not particularly limited as long as the gasket 30 can seal the gap between the edge portion of the vent hole 11 and the edge portion of the fracture portion 22.

Referring to FIG. 8, the cap assembly 3 according to one embodiment of the present disclosure may further include the pressing gasket 40 configured to seal a gap between the edge portion of the vent hole 11 and an edge portion of the gas through hole 274. The pressing gasket 40 may have a flat circular ring shape and may be disposed between the fracture member 21 and the pressing member 27. The material, thickness, or shape of the pressing gasket 40 is not particularly limited as long as the pressing gasket 40 can seal the gap between the edge portion of the vent hole 11 and the edge portion of the gas through hole 274.

The pressing portion 273, the pressing gasket 40, the fracture member 21, the gasket 30, and the cap plate 10 may be tightly in close contact with each other by an upward elastic force applied to the pressing portion 273. Accordingly, gas can be prevented or substantially prevented from escaping through the vent hole 11 before a gas pressure inside the case 2 reaches the set pressure, and an operation in which the fracture portion 22 fractures at the set pressure can be reliably implemented.

Referring to FIGS. 4 to 7, the inner side cover 50 according to one embodiment of the present disclosure may include an inner side cover body 51 and an open hole 55.

The inner side cover body 51 has the form of a plate corresponding to the cap plate 10 as a whole, and may be coupled to the inner side surface of the cap plate 10. The inner side cover body 51 may include an insulating material. A part of the vent pressure control device 20 may be covered by the inner side cover body 51. The inner side cover body 51 according to one embodiment of the present disclosure may include a first cover portion 52, a second cover portion 53, and a third cover portion 54.

In the inner side cover body 51, the first cover portion 52 covering the circumferential portion of the fracture member 21 and a part of the belt 26 in contact with the circumferential portion of the fracture member 21 may be formed. The fracture member 21 may be partially covered by the first cover portion 52, or supported by the first cover portion 52 at a lower end thereof. The second cover portion 53 may cover the circumferential portion of the rotating body 25 and another part of the belt 26 in contact with the circumferential portion of the rotating body 25. The rotating body 25 may be partially covered by the second cover portion 53, or supported by the second cover portion 53 at a lower end thereof.

The third cover portion 54 is provided (e.g. formed) between the first cover portion 52 and the second cover portion 53, and may cover still another part of the belt 26 disposed between the fracture member 21 and the rotating body 25. An intermediate portion of the belt 26 disposed between the fracture member 21 and the rotating body 25 may be covered by the third cover portion 54, or supported by the third cover portion 54 at a lower end thereof. The belt 26, which has a slim and thin linear shape, may be relatively weak in rigidity compared to other components embedded in the case 2. The belt 26 may be mostly covered and protected by the first cover portion 52, the second cover portion 53, and the third cover portion 54.

The open hole 55 may be provided (e.g. formed) to pass through the inner side cover body 51. A part of the vent pressure control device 20 may be covered by the inner side cover body 51. The open hole 55 may open another part of the vent pressure control device 20 downward. The open hole 55 according to one embodiment of the present disclosure may include a first open hole 56 and a second open hole 57.

The first open hole 56 may be provided (e.g. formed) at a position corresponding to the fracture member 21 and the pressing member 27. A part of the fracture member 21 and the pressing member 27 may be exposed to the outside of the inner side cover body 51 through the first open hole 56. An operator can perform assembly and adjustments while checking the assembly state of the fracture member 21 and the pressing member 27 and the position of the fracture portion 22, through the first open hole 56. By providing (e.g. forming) the first open hole 56, it is possible to prevent or substantially prevent the elastic bending portion 275 of the pressing member 27 having a downwardly convex shape from interfering with the inner side cover body 51.

The second open hole 57 may be formed at a position corresponding to the input member 24 and the rotating body 25. A part of the input member 24 and a part of the rotating body 25 may be exposed to the outside of the inner side cover body 51 through the second open hole 57. An operator may perform assembly and adjustments while checking the assembly state of the input member 24 and the rotating body 25 through the second open hole 57.

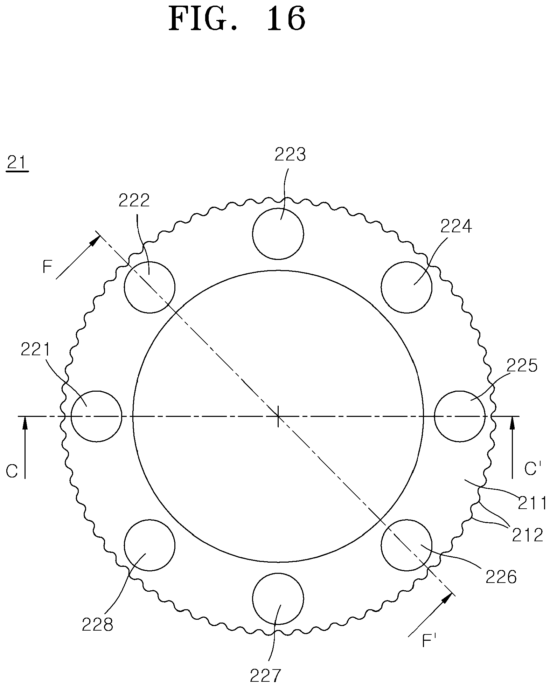

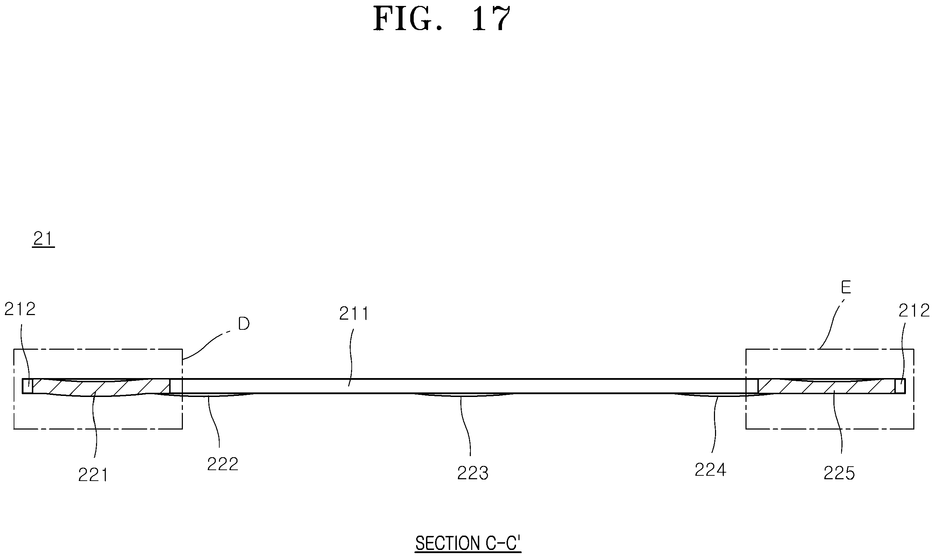

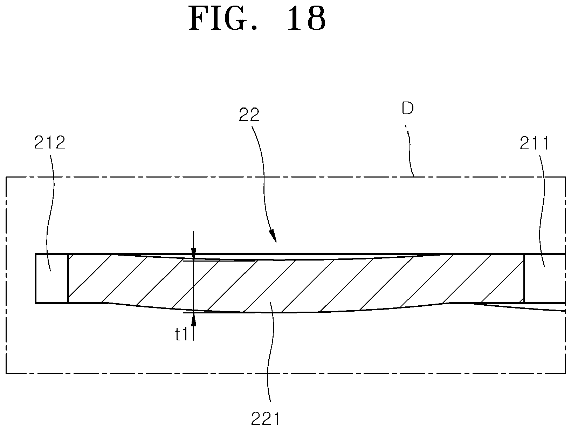

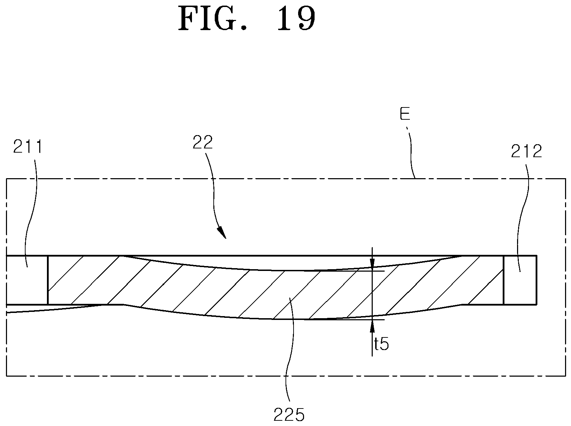

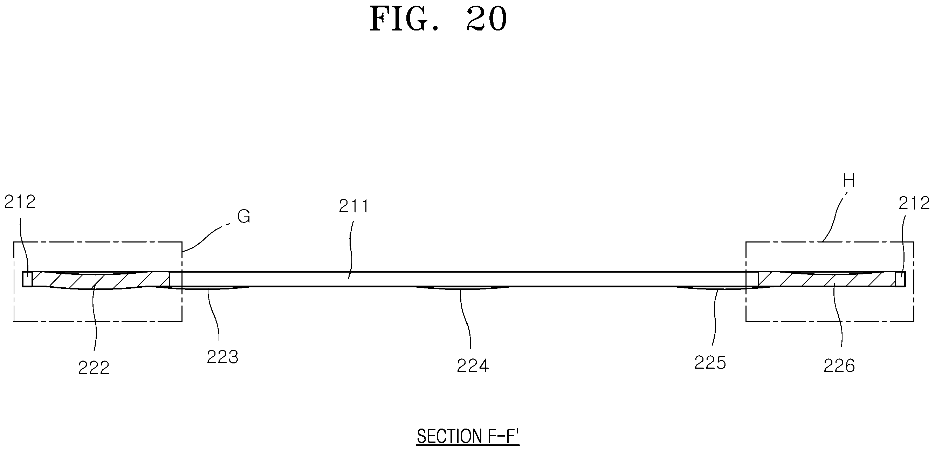

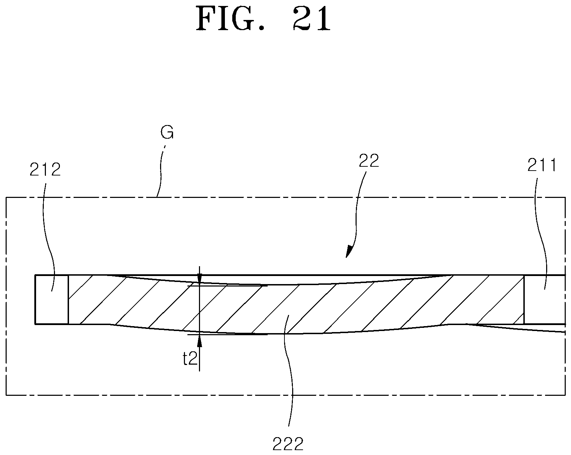

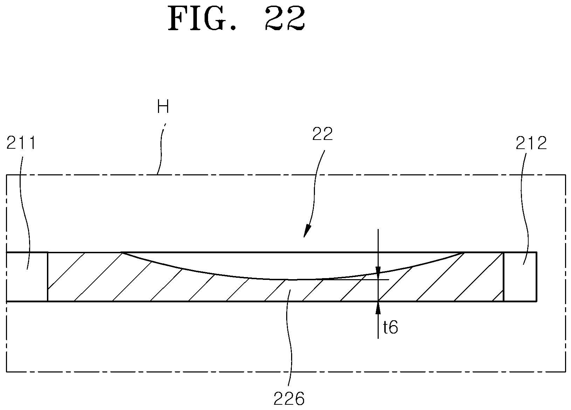

Referring to FIGS. 16 to 22, the fracture portion 22 according to one embodiment of the present disclosure may include a plurality of fracture portions, including a first fracture portion 221 and a second fracture portion 222. The fracture portion 22 according to one embodiment of the present disclosure may include eight fracture portions that fracture at different gas pressures.

The fracture portion 22 according to one embodiment of the present disclosure may include the first fracture portion 221, the second fracture portion 222, a third fracture portion 223, a fourth fracture portion 224, a fifth fracture portion 225, a sixth fracture portion 226, a seventh fracture portion 227, and an eighth fracture portion 228, which fracture at different gas pressures. The first fracture portion 221, the second fracture portion 222, the third fracture portion 223, the fourth fracture portion 224, the fifth fracture portion 225, the sixth fracture portion 226, the seventh fracture portion 227, and the eighth fracture portion 228 may be disposed to be spaced apart from each other in a circumferential direction on the fracture member 21 having a circular ring shape.

The first fracture portion 221 may have a first thickness t1 or a shape that allows the first fracture portion 221 to fracture at a first gas pressure. The second fracture portion 222 is disposed to be spaced apart from the first fracture portion 221, and may have a second thickness t2 or a shape that allows the second fracture portion 222 to fracture at a second gas pressure different from the first gas pressure. Thicknesses may decrease from the first fracture portion 221 toward the eighth fracture portion 228.

The fracture portions 22 may be formed by pressing a part of the fracture member 21 such that the thickness or shape thereof is varied by a processing method such as forging, pressing, or the like. The first fracture portion 221 may be formed by processing a part of the fracture member 21 with the first thickness t1 less than the fracture member 21. The second fracture portion 222 may be formed by processing a part of the fracture member 21 with the second thickness t2 less than the first thickness t1. As a strain of the fracture member 21 is increased, the fracture portion 22 may be processed with lesser thickness.

The fifth fracture portion 225 may be formed by processing a part of the fracture member 21 with the fifth thickness t5 less than a thickness of the fracture member 21. The sixth fracture portion 226 may be formed by processing a part of the fracture member 21 with the sixth thickness t6 less than the fifth thickness t5. In an embodiment, the fracture portion 22 may be formed in a shape in which the fracture member 21 is entirely curved convexly downward or partially concavely recessed by downwardly pressing the fracture member 21.

Each of the first to fifth fracture portions 221 to 225 according to one embodiment of the present disclosure may have a shape in which the entirety is curved convexly downward. Each of the sixth to eighth fracture portions 226 to 228 according to one embodiment of the present disclosure may have a shape with concavely recessed upper surface and a flat bottom surface. An embodiment such as forming a cut-out portion may also be applied to the fracture portion 22 as long as it is fracturable at a plurality of different fracture pressures.

As described above, by applying different forging ratios to ensure that the fracture portions 22 has different thicknesses and shapes, fracture toughness may be differently formed on the fracture member 21 by location. In addition, according to one embodiment of the present disclosure, by rotating the fracture member 21, one of the plurality of fracture portions 22 having different fracture toughness can be located to correspond to the vent hole 11. With such adjustment, the fracture pressure of the fracture member 21 may be controlled.

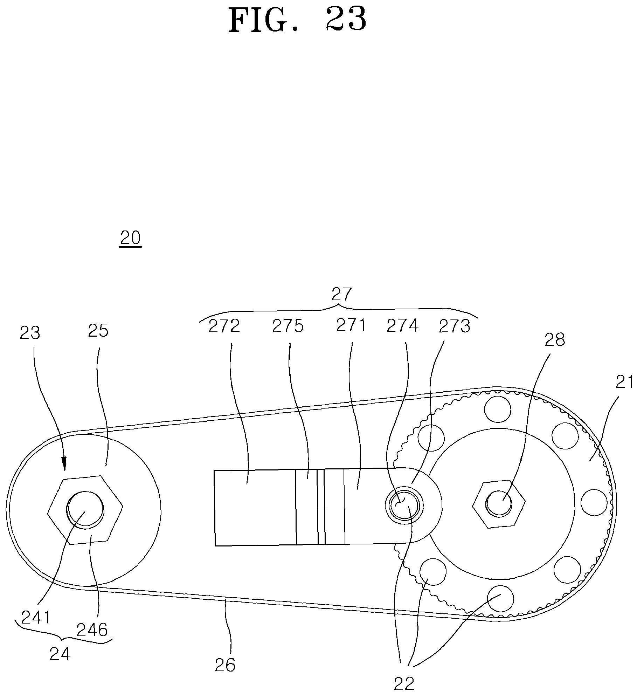

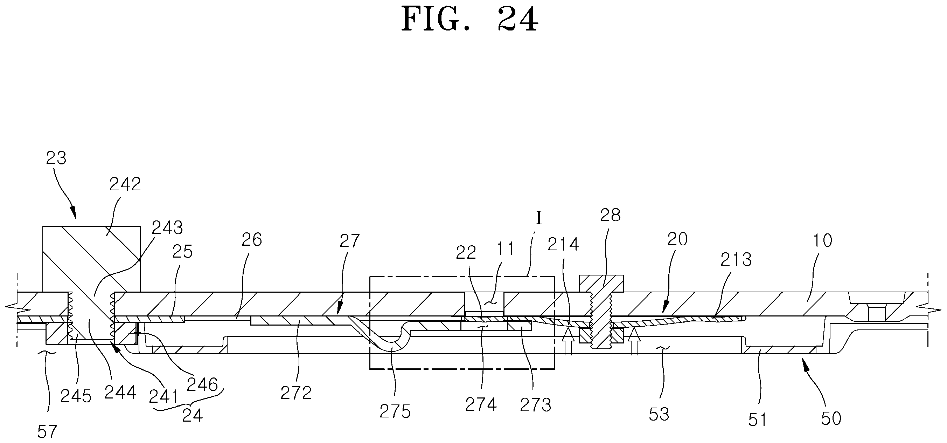

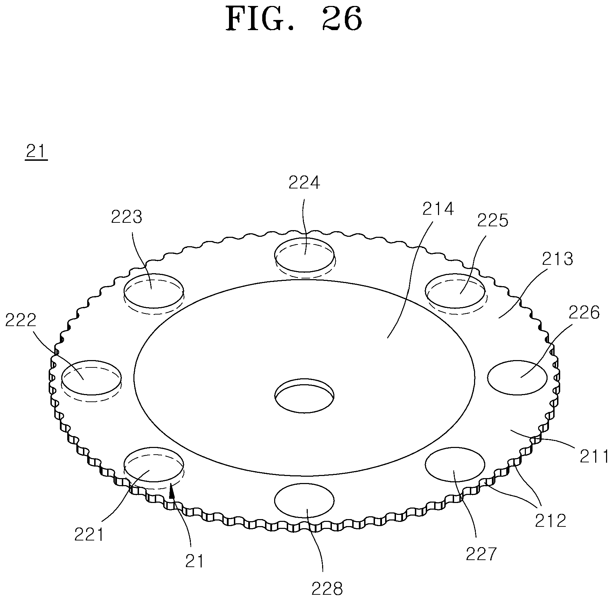

Referring to FIGS. 23 to 26, as compared to the vent pressure control device 20 according to the embodiment of the present disclosure illustrated with reference to FIGS. 1 to 22, a vent pressure control device 20 according to another embodiment of the present disclosure may include a fracture member 21 having a disk shape, and a rotation support device 28 configured to rotatably support the fracture member 21.

The fracture member 21 according to the present embodiment of the present disclosure has a disk shape, and a rotation center portion thereof may be coupled to the cap plate 10 by the rotation support device 28. The rotation support device 28 has a structure of a rotation shaft capable of rotatably supporting the fracture member 21 at a fixed position, and may be coupled to the cap plate 10. The rotation support device 28 may include a bolt member that may pass through the cap plate 10 and the fracture member 21, and a nut member that may be screw-coupled to an end portion of the bolt member.

This discloses an example of the rotation support device 28, but the present disclosure is not intended to particularly limit the structure of the rotation support device 28. The rotation support device 28 is not limited to any particular structure or shape, including embodiments in which the rotation support device 28 is fixed to a bottom surface of the cap plate 10 without passing through the cap plate 10, as long as it is capable of rotatably supporting the fracture member 21.

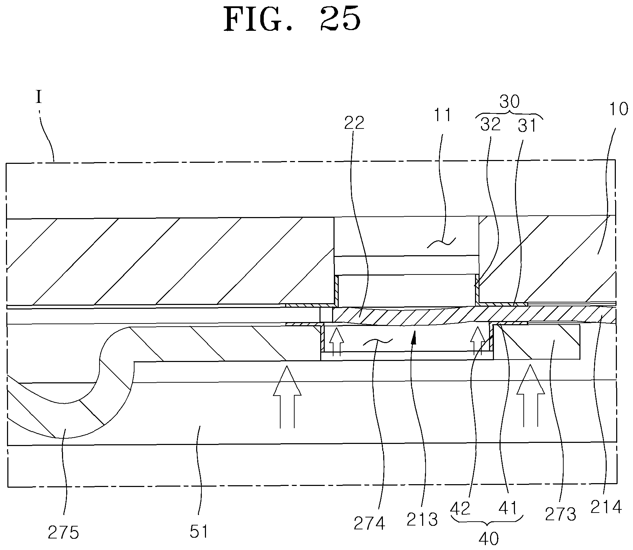

The fracture member 21 may be divided into a ring portion 213 having a ring shape, in which a fracture portion 22 is formed, and a circular portion 214 having a circular shape formed continuously and integrally with an inner diameter portion of the ring portion 213. The circular portion 214 may have a downwardly convexly curved shape. In a state in which the rotation support device 28 is axially coupled to a center portion of the circular portion 214, when the circular portion 214 is convexly curved downward, the ring portion 213 may be elastically in close contact with the cap plate 10 (see hollow arrow in FIG. 25).

According to the present embodiment of the present disclosure, by using the rotation support device 28, an edge portion (the ring portion 213), in which the fracture portion 22 is formed, of the fracture member 21 may be tightly in close contact with the cap plate 10. According to the present embodiment of the present disclosure, a central portion (the circular portion 214) of the fracture member 21, to which the rotation support device 28 is coupled, is convexly curved downward, so that the fracture member 21 can be elastically in close contact with the cap plate 10. Thus, when the rotation support device 28 is provided, a pressing member 27 may be omitted. When an operation outside the case 2 is not required, the input member 24, the rotating body 25, and the belt 26 of the rotation control member 23 may be omitted.

In addition, a gasket 30 and a pressing gasket 40 according to the present embodiment of the present disclosure may have a "T"-shaped cross-sectional shape as compared to the gasket 30 and the pressing gasket 40 according to the embodiment of the present disclosure shown in Figs 1 to 22.

The gasket 30 may have a "T"-shaped cross-sectional shape having a first horizontal ring portion 31 in contact with a bottom surface of the cap plate 10 and a first vertical cylindrical portion 32 that may be inserted into the vent hole 11. By inserting the first vertical cylindrical portion 32 into the vent hole 11, the gasket 30 may be easily and precisely assembled, and the gasket 30 may be prevented or substantially prevented from being moved (e.g. arbitrarily moved) out of a fixed position due to vibration or the like.

The pressing gasket 40 may have a "T"-shaped cross-sectional shape having a second horizontal ring portion 41 in contact with an upper surface of the pressing member 27 and a second vertical cylindrical portion 42 that may be inserted into a gas through hole 274. By inserting the second vertical cylindrical portion 42 into the gas through hole 274, the pressing gasket 40 may be easily and precisely assembled, the pressing gasket 40 may be prevented or substantially prevented from being moved (e.g. arbitrarily moved) out of a fixed position due to vibration or the like.

However, although the case 2 is illustrated in the drawings as having a prismatic shape, the present disclosure is not limited thereto, and the case may be formed in various shapes such as a circular shape, a pouch shape, and the like. In addition, the case may be made of a metal such as aluminum, an aluminum alloy, nickel-plated steel, or a laminate film or plastic forming a pouch.

Hereinafter, a battery pack P according to one embodiment of the present disclosure will be described.

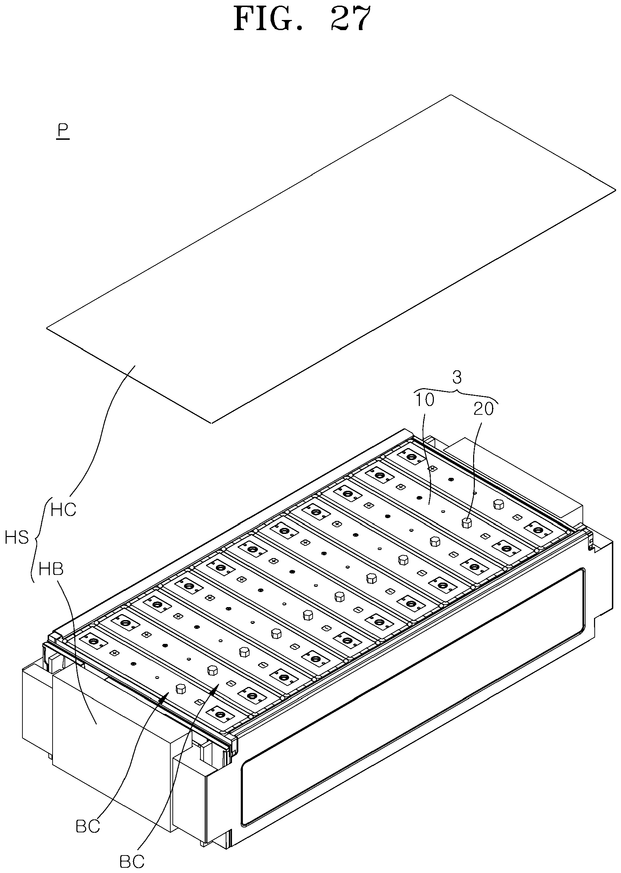

Referring to FIG. 27, the battery pack P may include a housing HS and a secondary battery BC.

The housing HS forms or substantially forms an external shape of the battery pack P, and may function as a component that supports (e.g. entirely supports) the secondary battery BC.

The housing HS may include a housing body HB and a housing cover HC.

The housing body HB may be formed to have a box shape of which an inside is empty and one side is open. The open side of the housing body HB may be disposed to face upward. However, the cross-sectional shape of the housing body HB is not limited to the rectangular shape shown in FIG. 27, and may be changed in design to various shapes such as a polygonal shape, a circular shape, an oval shape, and the like.

The housing cover HC is coupled to the housing body HB, and may close an inner space, that is, an accommodation space, of the housing body HB. For example, the housing cover HC is formed to have a substantially plate shape, and may be disposed to face the open side of the housing body HB, that is, an upper side surface of the housing body HB. The housing cover HC may be fixed to the housing body HB by various types of coupling methods such as bolting, welding, and insertion coupling.

The secondary battery BC may be disposed inside the housing HS. The secondary battery BC may be the secondary battery BC described with reference to FIGS. 1 to 22, or may be the secondary battery BC described with reference to FIGS. 23 to 26.

The secondary battery BC may be disposed inside the housing body HB. The secondary battery BC may be disposed inside the housing body HB such that the cap assembly 3 faces the housing cover HC.

A plurality of secondary batteries BC may be provided. The plurality of secondary batteries BC may be arranged inside the housing body HB in at least one row in a longitudinal direction and a width direction of the housing body HB. An insulation sheet (not shown) for insulation and thermal insulation may be disposed between adjacent secondary batteries BC. The plurality of secondary batteries BC may be connected in series or in parallel by bus bars (not shown).

The battery pack P may include a battery management system (BMS) for managing the plurality of secondary batteries BC. The BMS may include a detection device, a balancing device, and a control device.

The detection device may detect state information indicating a state (a voltage, a current, a temperature, or the like) of the secondary battery BC by detecting the state of the secondary battery BC. The detection device may detect the voltage of each secondary battery BC constituting the battery pack P. The detection device may detect the current of each secondary battery BC constituting the battery pack. The detection device may detect the temperature of the secondary battery BC or an ambient temperature at least one point in the battery pack P.

The balancing device may perform a balancing operation of the secondary batteries BC constituting the battery pack P.

The control device may receive the state information (the voltage, the current, the temperature, or the like) of the secondary battery BC from the detection device. The control device may monitor and calculate a state (a voltage, a current, a temperature, a state of charge (SOC), a state of health (SOH), or the like) of the secondary battery BC on the basis of the state information received from the detection device. The control device may also perform control functions (e.g., temperature control, balancing control, charge/discharge control, and the like), protection functions (e.g., over discharge, over charge, over-current protection, short-circuit, fire extinguishing, or the like), and the like on the basis of the status monitoring results. The control device may also perform a wired or wireless communication function with a device (e.g., a higher-level controller or vehicle, a charger, a power conversion system (PCS), or the like) external of the battery pack.

The control device may control a battery charging and discharging operation and a battery protection operation.

The detection device, the balancing device, and the control device may each include a processor and a memory.

The processor may be implemented as a central processing unit (CPU) or a system on chip (SoC), and may operate an operating system or applications to control a plurality of hardware or software components connected to the processor, thereby performing various data processing and operations. The processor may be configured to execute at least one command stored in the memory and store the execution result data in the memory.

The memory may store at least one command executed by the processor. The memory may be implemented as a volatile storage medium and/or a non-volatile storage medium, for example, implemented as a read-only memory (ROM) and/or a random-access memory (RAM).

According to one or more embodiments of the present disclosure, positions of fracture portions, which are fractured by gas pressure, can be changed by rotating a vent pressure control device that faces a vent hole, so that a reference fracture pressure can be differently selected and changed according to a battery model, a production purpose, an application environment, and the like. Accordingly, operational convenience and battery safety can be improved.

According to one or more embodiments of the present disclosure, when forming a plurality of fracture portions in a vent pressure control device, fracture toughness can be differentiated by location by applying different forging ratios to ensure that the fracture portions have different thicknesses and shapes, and one of the plurality of fracture portions having different fracture toughness can be located to correspond to a vent hole by rotating the vent pressure control device. With such adjustment, a reference fracture pressure of a battery can be controlled.

However, the effects obtainable through the present disclosure are not limited to the above effects, and other technical effects that are not mentioned will be clearly understood by those skilled in the art from the following description of the present disclosure.

Embodiments are set out in the following clauses:
Clause 1. A secondary battery comprising: an electrode assembly;
   a case configured to accommodate the electrode assembly; a cap plate coupled to the case and having a vent hole formed therein; and a vent pressure control device comprising a fracture portion that is fractured by gas pressure, is rotatably installed on the cap plate, and is varied in position facing the vent hole by rotation.
Clause 2. The secondary battery of Clause 1, wherein the vent pressure control device comprises: a fracture member on which the fracture portion is formed as a plurality of fracture portions, and which is disposed to face the vent hole; and a rotation control member installed on the cap plate and configured to rotatably support the fracture member so that one of the plurality of fracture portions selectively faces the vent hole.
Clause 3. The secondary battery of Clause 2, wherein the fracture portions are formed by pressing a part of the fracture member such that a thickness or shape thereof is varied.
Clause 4. The secondary battery of Clause 2, wherein the fracture portions comprise: a first fracture portion that fractures at a first gas pressure; and a second fracture portion that is disposed to be spaced apart from the first fracture portion and fractures at a second gas pressure different from the first gas pressure.
Clause 5. The secondary battery of Clause 2, wherein the rotation control member comprises: an input member installed on the cap plate and configured to receive a rotational force at a position spaced apart from the vent hole; a rotating body rotated by receiving the rotational force from the input member; and a belt of which a part is in contact with a circumference of the rotating body and another part is in contact with a circumference of the fracture member, and configured to connect the fracture member to the rotating body so that the fracture member is rotated in conjunction with the rotating body.
Clause 6. The secondary battery of Clause 5, wherein the fracture member comprises: a circular body on which the plurality of fracture portions are arranged in a circumferential direction; and a plurality of protrusions formed on a circumferential portion of the circular body and in contact with the belt.
Clause 7. The secondary battery of Clause 5, wherein the input member comprises: a first operating member installed to pass through the cap plate and the rotating body, installed to be rotatable at a position spaced apart from the vent hole, and comprising a part exposed to the outside of the cap plate in a graspable form; and a second operating member coupled to the first operating member by being coupled to an end portion of the first operating member, which passes through the cap plate and the rotating body.
Clause 8. The secondary battery of Clause 7, wherein the first operating member comprises: a grip portion disposed on an outer side surface of the cap plate; a passing-through portion extending from the grip portion toward an inner side surface of the cap plate through the cap plate; a rotating body connection portion formed continuously with the passing-through portion and connected to the rotating body so that the rotating body rotates together when the grip portion rotates; and a separation prevention portion formed continuously with the rotating body connection portion and coupled to the second operating member.
Clause 9. The secondary battery of Clause 2, wherein the vent pressure control device further comprises a pressing member installed on the cap plate and configured to press the fracture member toward the cap plate.
Clause 10. The secondary battery of Clause 9, wherein the pressing member comprises: a pressing body comprising an elastic material; a fixing portion formed on a first part of the pressing body and fixed to the cap plate; a pressing portion formed on a second part of the pressing body, in contact with the fracture member, and configured to press the fracture member toward the cap plate;
   a gas through hole formed to pass through the pressing portion at a position corresponding to the fracture portion, and configured to communicate with the vent hole when the fracture portion fractures; and an elastic bending portion formed by bending a third part of the pressing body so that the pressing portion elastically presses the fracture member.
Clause 11. The secondary battery of Clause 10, further comprising a pressing gasket disposed between the fracture member and the pressing member and configured to seal between an edge portion of the vent hole and an edge portion of the gas through hole.
Clause 12. The secondary battery of Clause 1, further comprising an inner side cover configured to cover the vent pressure control device and installed on the cap plate.
Clause 13. The secondary battery of Clause 12, wherein the inner side cover comprises: an inner side cover body including an insulating material and coupled to an inner side surface of the cap plate; and an open hole formed to pass through the inner side cover body and configured to open another part of the vent pressure control device.
Clause 14. The secondary battery of Clause 13, wherein the vent pressure control device comprises: a fracture member on which the fracture portion that is fractured by gas pressure is formed as a plurality of fracture portions, and which is disposed to face the vent hole; an input member installed on the cap plate and configured to receive a rotational force at a position spaced apart from the vent hole; a rotating body rotated by receiving the rotational force from the input member; and a belt of which a part is in contact with a circumference of the rotating body and another part is in contact with a circumference of the fracture member, and configured to connect the fracture member to the rotating body so that the fracture member is rotated in conjunction with the rotating body.
Clause 15. A battery pack comprising: a housing; and a plurality of secondary batteries disposed in the housing, wherein each of the plurality of secondary batteries includes: an electrode assembly; a case configured to accommodate the electrode assembly; a cap plate coupled to the case and having a vent hole formed therein; and a vent pressure control device comprising a fracture portion that is fractured by gas pressure, rotatably installed on the cap plate, and whose position facing the vent hole is varied by rotation.

Although the present disclosure has been described with reference to the example embodiments and drawings, the present disclosure is not limited thereto and may be variously implemented by those of ordinary skill in the art to which the present disclosure pertains, within the technical idea of the present disclosure and equivalents of the appended claims.

## Claims

1. A secondary battery comprising:
an electrode assembly;
a case configured to accommodate the electrode assembly;
a cap plate coupled to the case and having a vent hole formed therein; and
a vent pressure control device comprising a fracture portion that is fracturable by a gas pressure, is rotatably installed on the cap plate, and is variable in position facing the vent hole by rotation thereof.

2. The secondary battery as claimed in claim 1, wherein the vent pressure control device comprises:
a fracture member on which the fracture portion is formed as a plurality of fracture portions, and which is disposed to face the vent hole; and
a rotation control member installed on the cap plate and configured to rotatably support the fracture member so that one of the plurality of fracture portions selectively faces the vent hole.

3. The secondary battery as claimed in claim 2, wherein the fracture portions are formed by pressing a part of the fracture member such that a thickness or shape thereof is varied.

4. The secondary battery as claimed in claim 2 or 3, wherein the fracture portions comprise:
a first fracture portion configured to fracture at a first gas pressure; and
a second fracture portion spaced apart from the first fracture portion and configured to fracture at a second gas pressure different from the first gas pressure.

5. The secondary battery as claimed in claim 2, 3 or 4, wherein the rotation control member comprises:
an input member installed on the cap plate and configured to receive a rotational force at a position spaced apart from the vent hole;
a rotating body rotatable by receiving the rotational force from the input member; and
a belt of which a part is in contact with a circumference of the rotating body and another part is in contact with a circumference of the fracture member, and configured to connect the fracture member to the rotating body so that the fracture member is rotated in conjunction with the rotating body.

6. The secondary battery as claimed in claim 5, wherein the fracture member comprises:
a circular body on which the plurality of fracture portions are arranged in a circumferential direction; and
a plurality of protrusions formed on a circumferential portion of the circular body and in contact with the belt.

7. The secondary battery as claimed in claim 5 or 6, wherein the input member comprises:
a first operating member installed to pass through the cap plate and the rotating body, installed to be rotatable at a position spaced apart from the vent hole, and comprising a part exposed to an outside of the cap plate in a graspable form; and
a second operating member coupled to the first operating member by being coupled to an end portion of the first operating member, which passes through the cap plate and the rotating body.

8. The secondary battery as claimed in claim 7, wherein the first operating member comprises:
a grip portion disposed on an outer side surface of the cap plate;
a passing-through portion extending from the grip portion toward an inner side surface of the cap plate through the cap plate;
a rotating body connection portion formed continuously with the passing-through portion and connected to the rotating body so that the rotating body rotates together when the grip portion rotates; and
a separation prevention portion formed continuously with the rotating body connection portion and coupled to the second operating member.

9. The secondary battery as claimed in any one of claims 2 to 8, wherein the vent pressure control device further comprises a pressing member installed on the cap plate and configured to press the fracture member toward the cap plate.

10. The secondary battery as claimed in claim 9, wherein the pressing member comprises:
a pressing body comprising an elastic material;
a fixing portion formed on a first part of the pressing body and fixed to the cap plate;
a pressing portion formed on a second part of the pressing body, in contact with the fracture member, and configured to press the fracture member toward the cap plate;
a gas through hole formed to pass through the pressing portion at a position corresponding to the fracture portion, and configured to communicate with the vent hole when the fracture portion fractures; and
an elastic bending portion formed by bending a third part of the pressing body so that the pressing portion elastically presses the fracture member.

11. The secondary battery as claimed in claim 10, further comprising a pressing gasket disposed between the fracture member and the pressing member and configured to seal between an edge portion of the vent hole and an edge portion of the gas through hole.

12. The secondary battery as claimed in any preceding claim, further comprising an inner side cover configured to cover the vent pressure control device and installed on the cap plate.

13. The secondary battery as claimed in claim 12, wherein the inner side cover comprises:
an inner side cover body including an insulating material and coupled to an inner side surface of the cap plate; and
an open hole formed to pass through the inner side cover body and configured to open another part of the vent pressure control device.

14. The secondary battery as claimed in claim 13, wherein the vent pressure control device comprises:
a fracture member on which the fracture portion that is fractured by gas pressure is formed as a plurality of fracture portions, and which is disposed to face the vent hole;
an input member installed on the cap plate and configured to receive a rotational force at a position spaced apart from the vent hole;
a rotating body rotatable by receiving the rotational force from the input member; and
a belt of which a part is in contact with a circumference of the rotating body and another part is in contact with a circumference of the fracture member, and configured to connect the fracture member to the rotating body so that the fracture member is rotated in conjunction with the rotating body.

15. A battery pack comprising:
a housing; and
a plurality of secondary batteries disposed in the housing,
wherein each of the plurality of secondary batteries includes:
an electrode assembly;
a case configured to accommodate the electrode assembly;
a cap plate coupled to the case and having a vent hole formed therein; and
a vent pressure control device comprising a fracture portion that is fracturable by a gas pressure, is rotatably installed on the cap plate, and whose position facing the vent hole is variable by rotation thereof.
